# EUROPÄISCHE PATENTSCHRIFT

(11) **EP 2 665 632 B1**
(45) Veröffentlichungstag und Bekanntmachung des Hinweises auf die Patenterteilung: **08.06.2016**
(21) Anmeldenummer: 11791272.5
(22) Anmeldetag: 01.12.2011
(51) Int. Cl.: B60W 10/02, B60W 10/06, B60W 10/08, B60W 10/113, B60W 20/00, B60W 30/192

(54) **VERFAHREN UND VORRICHTUNG ZUM BETREIBEN EINER ANTRIEBSVORRICHTUNG**
METHOD AND DEVICE FOR OPERATING A DRIVE DEVICE
PROCÉDÉ ET DISPOSITIF PERMETTANT DE FAIRE FONCTIONNER UN DISPOSITIF D'ENTRAÎNEMENT

(30) Priorität: 19.01.2011 DE 102011002887; 25.01.2011 DE 102011003080
(43) Veröffentlichungstag der Anmeldung: 27.11.2013
(73) Patentinhaber: Robert Bosch GmbH, 70442 Stuttgart (DE)
(72) Erfinder: MAASS, Alexander, 71636 Ludwigsburg (DE); RICHTER, Boyke, 76228 Karlsruhe (DE)
(86) Internationale Anmeldenummer: PCT/EP2011/071466
(87) Internationale Veröffentlichungsnummer: WO 2012/097905

(56) Entgegenhaltungen:
- WO-A1-2010/009943
- DE-A1-102007 022 774
- US-A1- 2005 139 035

## Beschreibung

Die Erfindung betrifft ein Verfahren zum Betreiben einer Antriebsvorrichtung eines Kraftfahrzeugs, wobei die Antriebsvorrichtung wenigstens einen Verbrennungsmotor und wenigstens eine elektrische Maschine sowie ein mit dem Verbrennungsmotor wirkverbindbares Doppelkupplungsgetriebe mit einem ersten Teilgetriebe, dem eine erste Kupplung zugeordnet ist, und einem zweiten Teilgetriebe, dem eine zweite Kupplung und die elektrische Maschine zugeordnet sind, umfasst, wobei in einem rein elektrischen Fahrbetrieb insbesondere zum Erzeugen eines Vortriebsmoments für das Kraftfahrzeug beziehungsweise an Antriebsrädern des Kraftfahrzeugs die elektrische Maschine motorisch betrieben wird, im zweiten Teilgetriebe ein Fahrgang eingelegt ist und beide Kupplungen geöffnet sind.

Ferner betrifft die Erfindung eine Vorrichtung zum Betreiben einer Antriebsvorrichtung eines Kraftfahrzeugs, insbesondere zur Durchführung des oben beschriebenen Verfahrens, wobei die Antriebsvorrichtung wenigstens einen Verbrennungsmotor und wenigstens eine elektrische Maschine sowie ein mit dem Verbrennungsmotor wirkverbindbares Doppelkupplungsgetriebe mit einem ersten Teilgetriebe, dem eine erste Kupplung zugeordnet ist, und mit einem zweiten Teilgetriebe, dem eine zweite Kupplung und die elektrische Maschine zugeordnet sind, umfasst, wobei die Vorrichtung Mittel aufweist, um die Antriebsvorrichtung zu steuern, und wobei für einen rein elektrischen Fahrbetrieb die Mittel die Antriebsvorrichtung derart ansteuern, dass die elektrische Maschine motorisch betrieben wird, im zweiten Teilgetriebe ein Fahrgang eingelegt ist und beide Kupplungen geöffnet sind.

### Stand der Technik

Verfahren der eingangs genannten Art sind aus dem Stand der Technik bekannt. Bei sogenannten Hybridantriebsvorrichtungen können sowohl ein Verbrennungsmotor als auch eine elektrische Maschine zum Antreiben des Kraftfahrzeugs genutzt werden. Dabei kann die Antriebsvorrichtung derart betrieben werden, dass der Verbrennungsmotor und die elektrische Maschine ein gemeinsames Drehmoment auf Antriebsräder des Kraftfahrzeugs aufbringen, oder ein rein verbrennungsmotorischer Betrieb oder ein rein elektrischer Betrieb der Antriebsvorrichtung erfolgt. Bei einem rein elektrischen Fahrbetrieb, sind beide Kupplungen zum Verbrennungsmotor geöffnet und in dem Teilgetriebe, welchem die elektrische Maschine zugeordnet ist, ein Gang eingelegt, um das von der elektrischen Maschine aufgebrachte Drehmoment an die Antriebsräder zu leiten. Dabei wird die elektrische Maschine mit elektrischer Energie aus einem elektrischen Speicher der Antriebsvorrichtung gespeist. Erreicht der Ladezustand des elektrischen Speichers einen für den Weiterbetrieb kritischen Wert, ist es erforderlich den elektrischen Speicher durch generatorisches Betreiben der elektrischen Maschine wieder aufzuladen. Hierzu muss das Antriebsdrehmoment von dem anderen Antriebsaggregat, also von dem Verbrennungsmotor erbracht werden. Wurde der Verbrennungsmotor zuvor abgeschaltet, beispielsweise um den Kraftstoffverbrauch zu senken, so ist ein erneutes Starten des Verbrennungsmotors notwendig. Ist kein separater Starter für den Verbrennungsmotor vorgesehen, erfolgt das Andrehen des Verbrennungsmotors in der Regel mit Hilfe der elektrischen Maschine.

Die deutsche Offenlegungsschrift DE 10 2007 050 659 A1 offenbart hierzu ein Verfahren, bei welchem zum Start des Verbrennungsmotors die zweite Kupplung offengehalten und die dem ersten Teilgetriebe zugeordnete Kupplung zumindest soweit geschlossen wird, dass dieser ein zum Start des Verbrennungsmotors erforderliches Moment überträgt. Dabei erfolgt also ein Kraftfluss von der elektrischen Maschine über das zweite Teilgetriebe auf das erste Teilgetriebe, und von dort über die erste Kupplung zum Verbrennungsmotor.

Weiterhin ist aus der gattungsgemässen internationalen Veröffentlichungsschrift WO 2010/009943 A1 ein Verfahren bekannt, bei welchem zum Starten des Verbrennungsmotors aus einem elektrischen Betriebszustand, bei Stillstand des Fahrzeugs die zweite Kupplung geschlossen wird, um den Verbrennungsmotor durch die elektrische Maschine mit anzutreiben, wobei in dem ersten Teilgetriebe ein Gang mit einem höheren Übersetzungsverhältnis als der eingelegte Gang des zweiten Teilgetriebes eingelegt wird.

Bei dem Start des Verbrennungsmotors gemäß der deutschen Offenlegungsschrift ist eine Mindestfahrzeuggeschwindigkeit notwendig, um den Verbrennungsmotor zu starten, während in dem Verfahren gemäß der internationalen Offenlegungsschrift der Stillstand des Fahrzeugs erforderlich ist.

Für Situationen, in welchen ein langsames kriechen des Fahrzeugs bei niedrigen Geschwindigkeiten, wie beispielsweise im Stau, insbesondere für längere Zeit erforderlich ist, können zum Starten des Verbrennungsmotors die bekannten Verfahren nicht genutzt werden.

### Offenbarung der Erfindung

Das erfindungsgemäße Verfahren zum Betreiben der Antriebsvorrichtung des Kraftfahrzeugs sieht daher zum Starten des Verbrennungsmotors insbesondere bei niedrigen Fahrgeschwindigkeiten vor, dass während des elektrischen Fahrbetriebs die zweite Kupplung geschlossen wird, um den Verbrennungsmotor durch die elektrische Maschine anzutreiben, dass zeitgleich oder anschließend im ersten Teilgetriebe ein Gang eingelegt wird, der ein niedrigeres Übersetzungsverhältnis (das heißt ein höherer Gang) aufweist, als der eingelegte Fahrgang des zweiten Teilgetriebes, dass dann die erste Kupplung in eine Schlupfstellung und anschließend das zweite Teilgetriebe in eine Neutralstellung verbracht werden, dass anschließend die Drehzahl der elektrischen Maschine zumindest auf eine Startdrehzahl für den Verbrennungsmotor erhöht wird, wobei der Schlupf der ersten Kupplung zum Beibehalten eines Vortriebsmoments des Kraftfahrzeugs eingestellt wird, und dass der Verbrennungsmotor bei Erreichen seiner Startdrehzahl gestartet wird. Durch das erfindungsgemäße Verfahren wird erreicht, dass ohne Wegfall des Vortriebmoments der Verbrennungsmotor auch bei sehr niedrigen Geschwindigkeiten und daraus folgenden niedrigen Drehzahlen gestartet werden kann. Dies wird im Wesentlichen dadurch erreicht, dass im ersten Teilgetriebe ein Gang eingelegt wird, der ein niedrigeres Übersetzungsverhältnis aufweist als der eingelegte Fahrgang des zweiten Teilgetriebes. Hierdurch wird der Verbrennungsmotor an einen höheren Gang angekoppelt als die elektrische Maschine - in Richtung des Kraftflusses von dem jeweiligen Antriebsaggregat zu den Antriebsrädern des Kraftfahrzeugs gesehen -, wodurch von dem sehr langsamen drehenden (angetriebenen) Verbrennungsmotor über die schlupfende erste Kupplung ein Drehmoment in Richtung der Antriebsräder fließt. Dadurch wird stets ein Kraftfluss zu den Antriebsrädern gewährleistet, wobei gleichzeitig bei niedrigen Fahrgeschwindigkeiten durch den eingestellten Schlupf der ersten Kupplung der Verbrennungsmotor auf eine Drehzahl bringbar ist, die zum Starten des Verbrennungsmotors ausreicht, die sogenannte Startdrehzahl. Durch das vorteilhafte Verfahren kann insbesondere ein separater Anlasser für den Verbrennungsmotor entfallen, sodass vorzugsweise die Antriebsvorrichtung ohne separaten Anlasser vorgesehen wird. Allerdings entsteht in diesem Zustand ein hoher Reibungsverlust an der schlupfenden Kupplung, wenn die Fahrgeschwindigkeit weiterhin gering bleibt.

Daher wird vorzugsweise nach dem Start des Verbrennungsmotors die zweite Kupplung geöffnet und die Drehzahl der elektrischen Maschine wieder auf ihre Ausgangsdrehzahl verringert und im zweiten Teilgetriebe der Fahrgang wieder eingelegt. Sobald der Verbrennungsmotor gestartet ist, kann dieser selbstständig ein Drehmoment über die erste Kupplung in das erste Teilgetriebe und damit an die Antriebsräder leiten. Dabei befindet sich die erste Kupplung zweckmäßigerweise zunächst weiterhin in ihrer Schlupfstellung. Nach Verringern der Drehzahl der elektrischen Maschine auf eine zum Wiedereinlegen des Fahrgangs des zweiten Teilgetriebes passende Drehzahl, insbesondere auf ihre Ausgangsdrehzahl, und das Wiedereinlegen des Fahrgangs des zweiten Teilgetriebes, wird über die elektrische Maschine wieder das gewünschte Vortriebsmoment auf die Antriebsräder übertragen, wie vor dem Start des Verbrennungsmotors, sodass durch Öffnen der ersten Kupplung wieder in den rein elektrischen Fahrbetrieb zurückgestellt wird, ohne dass das Vortriebsmoment an den Antriebsrädern wegfällt.

Vorzugsweise wird zum Umschalten in einen verbrennungsmotorischen Betrieb zunächst die erste Kupplung, geöffnet und ein rein elektrischer Zwischenbetrieb eingestellt. Durch das vollständige Öffnen der ersten Kupplung wird insbesondere der Verschleiß der ersten Kupplung verringert. Anschließend wird der Verbrennungsmotor vorzugsweise mit dem Teilgetriebe mit dem kleinsten eingelegten Gang verbunden, indem die Kupplung dieses Teilgetriebes in Schlupf gebracht wird. Bevorzugt ist dies das Teilgetriebe 1.

Bevorzugt wird dazu in dem ersten Teilgetriebe ein für die Fahrgeschwindigkeit geeigneter Gang, insbesondere mit einer höheren Übersetzung als zuvor, eingelegt und anschließend die erste Kupplung wieder geschlossen. Durch das Einlegen eines Gangs mit einer höheren Übersetzung als zuvor in dem ersten Teilgetriebe, also in einen niedrigeren Gang im Vergleich zu dem Gang, der zum Starten des Verbrennungsmotors geschaltet wurde, vorzugsweise in den niedrigsten Gang des ersten Teilgetriebes, wird die hohe Mindestdrehzahl des Verbrennungsmotors in eine niedrigere Ausgangsdrehzahl an den Antriebsrädern gewandelt. Wird die erste Kupplung wieder geschlossen oder in Schlupf gebracht, findet dadurch keine oder nur eine geringe Änderung der Drehzahl beziehungsweise des Drehmoments an den Antriebsrädern statt.

Besonders bevorzugt wird die erste Kupplung beim Schließen zunächst in eine Schlupfstellung verbracht, um ein ruckelfreies Ankoppeln des Verbrennungsmotors zu gewährleisten. Dadurch wird insbesondere erreicht, dass sich die Drehzahl an den Antriebsrädern, nicht oder zumindest nicht ruckartig und damit nicht spürbar verändert.

Weiterhin ist vorzugsweise vorgesehen, dass das zweite Teilgetriebe anschließend in eine Neutralstellung verbracht, die elektrische Maschine in einen generatorischen Betrieb geschaltet und die zweite Kupplung zum Antreiben der elektrischen Maschine geschlossen wird. Unter einer Neutralstellung eines Teilgetriebes ist im Zusammenhang mit der vorliegenden Anmeldung stets ein Zustand zu verstehen, in welchem von einer Eingangswelle des Teilgetriebes auf eine Ausgangswelle des Teilgetriebes kein Drehmoment übertragen wird. Dies ist dann der Fall, wenn keiner der möglichen Gänge des Teilgetriebes eingelegt ist. Durch das Schalten des zweiten Teilgetriebes in eine Neutralstellung wird der Kraftfluss von dem zweiten Teilgetriebe zu den Antriebsrädern unterbrochen, sodass sich die elektrische Maschine unabhängig von den Antriebsrädern betreiben lässt, insbesondere in Bezug auf ihre Drehzahl. Durch Schließen der zweiten Kupplung lässt sich sodann die elektrische Maschine durch den Verbrennungsmotor antreiben. Ist die elektrische Maschine in einen generatorischen Betrieb geschaltet, wird dadurch Energie erzeugt und der elektrische Speicher geladen.

Besonders bevorzugt wird beim Verbringen der ersten Kupplung in eine Schlupfstellung die zweite Kupplung ebenfalls in eine Schlupfstellung verbracht, um Drehmomentschwankungen des insbesondere angetriebenen Verbrennungsmotors zu dämpfen. Der Verbrennungsmotor, sofern er nur durch die elektrische Maschine angetrieben wird, bringt ein Schleppmoment auf den Antriebsstrang beziehungsweise die Antriebsvorrichtung, und, dass das durch das Einstellen der Schlupfstellungen gedämpft wird. Insbesondere werden die von dem Verbrennungsmotor erzeugten Drehmomentschwankungen gedämpft beziehungsweise gefiltert.

Vorzugsweise wird das beschriebene Verfahren bei Fahrgeschwindigkeiten von 10 km/h oder kleiner, insbesondere von 5 km/h oder kleiner durchgeführt. So wird versuchsweise die Fahrgeschwindigkeit des Fahrzeugs beziehungsweise Kraftfahrzeugs überwacht und bei auftreten von Fahrgeschwindigkeiten von 10 km/h oder kleiner, insbesondere von 5 km/h oder kleiner das oben beschriebene Verfahren freigeschaltet beziehungsweise aktiviert.

Besonders bevorzugt wird das Verfahren in Abhängigkeit von einem Ladezustand des der elektrischen Maschine zugeordneten elektrischen Speichers durchgeführt. Dazu wird der Ladezustand des elektrischen Speichers überwacht und mit mindestens einem vorgebbaren Schwellenwert verglichen. Unterschreitet der Ladezustand den Schwellenwert, und befindet sich das Fahrzeug in einem elektrischen Fahrbetrieb mit Fahrgeschwindigkeiten von 10 km/h oder kleiner, insbesondere von 5 km/h oder kleiner, wird das oben beschriebene Verfahren durchgeführt. Das Verfahren ist aber auch im Fahrzeugstillstand durchführbar.

Für den Fall, dass das Fahrzeug stillsteht, während sich die Antriebsvorrichtung in einem rein elektrischen Betrieb befindet, so ist alternativ zu dem oben beschriebenen Verfahren bevorzugt vorgesehen, dass zum Starten des Verbrennungsmotors in beiden Teilgetrieben ein Gang eingelegt und beide Kupplungen geschlossen werden, sodass das Doppelkupplungsgetriebe insgesamt verklemmt wird und sich das Fahrzeug an dem verklemmten Doppelkupplungsgetriebe - beispielsweise an einer Steigung stehend - abstützt. Anschließend wird bevorzugt das zweite Teilgetriebe in eine Neutralstellung verbracht, sodass die Drehzahl der elektrischen Maschine unabhängig von der Drehzahl der Antriebsräder ist. Durch Hochfahren der Drehzahl der elektrischen Maschine auf die Startdrehzahl des Verbrennungsmotors kann dieser nun gestartet werden, wobei beim Hochfahren die erste Kupplung in eine Schlupfstellung derart gestellt wird, dass an den Antriebsrädern weiterhin die Drehzahl gleich null ist. Sobald der Verbrennungsmotor gestartet ist und eigenständig weiterläuft, wird das von ihm erzeugte Drehmoment zum Abstützen des Fahrzeugs mittels der schlupfenden ersten Kupplung genutzt. Wenn nun noch die elektrische Maschine in den generatorischen Betrieb geschaltet wird, stützt der Verbrennungsmotor das Fahrzeug an der Steigung ab und treibt gleichzeitig die elektrische Maschine an, um elektrische Energie zu erzeugen, die dann bevorzugt dem elektrischen Speicher zugeführt wird. Somit ist es mittels des alternativen Verfahrens möglich, den Verbrennungsmotor zu starten und in den generatorischen Betrieb zu schalten, ohne dass das Haltemoment an den Antriebsrädern weggenommen beziehungsweise unterbrochen wird. Ein Zurückrollen des Fahrzeugs wird zu jedem Zeitpunkt sicher verhindert.

Die erfindungsgemäße Vorrichtung zeichnet sich dadurch aus, dass die Mittel zum Starten des Verbrennungsmotors während des elektrischen Fahrbetriebs die Antriebsvorrichtung gemäß dem oben beschriebenen Verfahren ansteuert. Dies bedeutet, dass die Mittel die Antriebsvorrichtung derart steuern, dass während des elektrischen Fahrbetriebs die zweite Kupplung geschlossen wird, um den Verbrennungsmotor durch die elektrische Maschine anzutreiben, dass gleichzeitig oder anschließend im ersten Teilgetriebe ein Gang eingelegt wird, der ein niedrigeres Übersetzungsverhältnis aufweist, als der eingelegte Fahrgang des zweiten Teilgetriebes, dass dann die erste Kupplung in eine Schlupfstellung und anschließend das zweite Teilgetriebe in eine Neutralstellung verbracht werden, dass anschließend die Drehzahl der elektrischen Maschine zumindest auf eine Startdrehzahl für den Verbrennungsmotor erhöht wird, wobei der Schlupf der ersten Kupplung zum Beibehalten eines Vortriebsmoments des Kraftfahrzeugs eingestellt wird, und dass der Verbrennungsmotor bei Erreichen seiner Startdrehzahl gestartet wird. Es ergeben sich hierdurch die oben bereits genannten Vorteile. Bei der Vorrichtung handelt es sich besonders bevorzugt um ein Steuergerät, das als Mittel zumindest über entsprechende Signalleitungen verfügt, mittels derer es mit den unterschiedlichen Komponenten der Antriebsvorrichtung verbunden/verbindbar ist, um diese entsprechend anzusteuern. Die Vorrichtung beziehungsweise das Steuergerät umfasst zweckmäßigerweise weiterhin als Mittel einen Prozessor zur Durchführung der oben beschriebenen Ansteuerung beziehungsweise des oben beschriebenen Verfahrens. Bevorzugte Ausführungsformen der Vorrichtung ergeben sich aus den oben beschriebenen Steuerungsvorgaben der beschriebenen Verfahrensoptionen.

Im Folgenden soll die Erfindung anhand der Zeichnung näher erläutert werden. Dazu zeigen:
- Figuren 1A bis 1K: ein Verfahren zum Betreiben einer Antriebsvorrichtung in schrittweisen Darstellungen und
- Figuren 2A bis 2F: ein alternatives Verfahren zum Betreiben der Antriebsvorrichtung, ebenfalls in schrittweisen Darstellungen.

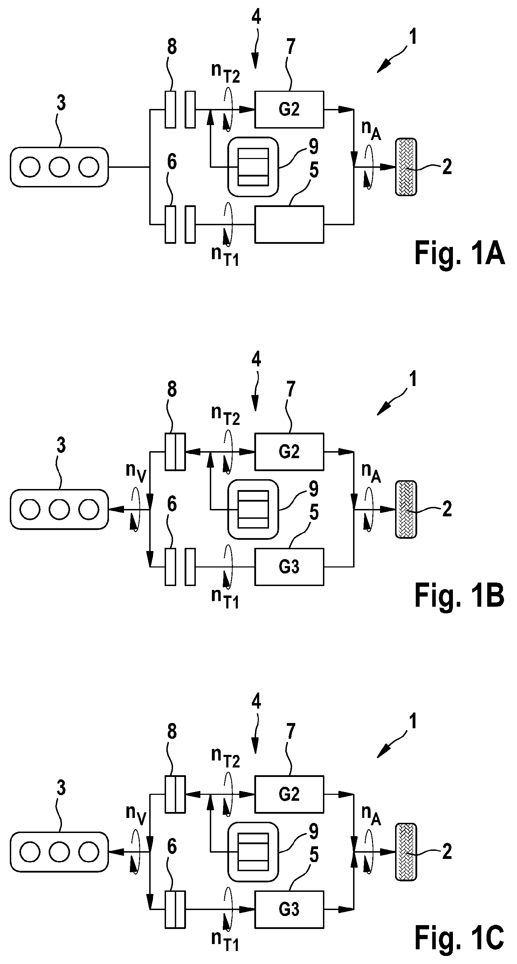

Figuren 1A bis 1K zeigen eine vereinfachte Darstellung einer Antriebsvorrichtung 1, die zum Antreiben von Antriebsrädern 2, von denen hier nur eines angedeutet ist, eines hier nicht näher dargestellten Kraftfahrzeugs. Die Antriebsvorrichtung 1 ist als Hybridantrieb ausgebildet und weist dazu einen Verbrennungsmotor 3 auf, der über ein Doppelkupplungsgetriebe 4 mit den Antriebsrädern 2 wirkverbunden ist. Das Doppelkupplungsgetriebe 4 weist ein erstes Teilgetriebe 5 auf, dem eine erste Kupplung 6 zugeordnet ist, sowie ein zweites Teilgetriebe 7, dem eine zweite Kupplung 8 zugeordnet ist. In dem ersten Teilgetriebe 5, können zumindest die ungeraden Gänge 1, 3 und gegebenenfalls 5, und in dem zweiten Teilgetriebe 7 zumindest die geraden Gänge 2, 4 und gegebenenfalls 6 eingestellt werden. Je höher der Gang ist, desto niedriger ist sein eingestelltes Übersetzungsverhältnis i. So weist der erste Gang G1 in dem vorliegenden Ausführungsbeispiel ein Übersetzungsverhältnis von i = 16, der zweite Gang G2 ein Übersetzungsverhältnis von i = 10 und der dritte Gang G3 ein Übersetzungsverhältnis von i = 6 auf. Weiterhin umfasst die Antriebsvorrichtung 1 eine elektrische Maschine 9, die dem zweiten Teilgetriebe 7 zugeordnet ist. Dabei ist die elektrische Maschine 9 vorliegend mit einer Eingangswelle des Teilgetriebes 7 wirkverbunden, sodass durch die elektrische Maschine 9 ein Drehmoment auf den zweiten Teilgetriebestrang zwischen der Kupplung 8 und dem zweiten Teilgetriebe 7 aufbringbar ist und die Drehzahl der Eingangswelle der Drehzahl der elektrischen Maschine 9 entspricht. Die in den Figuren eingetragenen Pfeilspitzen zeigen die Richtung des Kraftflusses in der Antriebsvorrichtung 1 an. Sind zwischen zwei Elementen der Antriebsvorrichtung 1 keine Pfeilspitzen eingetragen, so findet kein Kraftfluss in eine bestimmte Richtung statt. Aus Übersichtlichkeitsgründen sind eine als Steuergerät ausgebildete Vorrichtung zum Betreiben der Antriebsvorrichtung sowie deren Mittel zum Ansteuern der Antriebsvorrichtung nicht dargestellt.

Figur 1A zeigt die Antriebvorrichtung 1 während eines rein elektrischen Fahrbetriebs. Der Verbrennungsmotor 3 ist abgeschaltet und beide Kupplungen 6, 8 sind geöffnet. Nur die elektrische Maschine 9 erzeugt ein Drehmoment, das auf die Antriebsräder 2 übertragen wird. Bei einem elektrischen Fahrbetrieb mit besonders niedrigen Fahrgeschwindigkeiten, insbesondere von 5 km/h oder kleiner, also bei sehr langsamem elektrischen Kriechen liegt ein Zustand vor, bei dem in keinem der einlegbaren Gänge die Drehzahl hoch genug ist, um den Verbrennungsmotor auf eine Startdrehzahl anzudrehen, sodass er aus eigener Kraft weiterlaufen könnte. Dieser Zustand ist kritisch, weil es keine naheliegende Möglichkeit gibt, im Fall eines einen kritischen Ladezustand erreichenden elektrischen Speichers den Verbrennungsmotor 3 zu starten, ohne das Vortriebsmoment an den Antriebsrädern 2 wegzunehmen. In den folgenden Figuren 1B bis 1K soll nunmehr schrittweise ein Verfahren beschrieben werden, durch welches das Starten des Verbrennungsmotors in dem beschriebenen kritischen Zustand dennoch möglich ist, ohne das Vortriebsmoment an den Antriebsrädern 2 zu unterbrechen. Im beschriebenen Beispiel wird angenommen, dass die Fahrgeschwindigkeit und/oder das Vortriebsmoment des Kraftfahrzeugs konstant ist.

In einem ersten Schritt gemäß Figur 1B wird dazu die Kupplung 8 geschlossen, sodass das Antriebsmoment der elektrischen Maschine 9 auf die Antriebswelle des Verbrennungsmotors 3 übertragen wird, sodass die Drehzahl n_{V} des Verbrennungsmotors der Drehzahl n_{T2} der Eingangswelle des zweiten Teilgetriebes 7 entspricht. Während in dem Teilgetriebe 7 der Gang G2 eingelegt ist, wird in dem Teilgetriebe 5 der dritte Gang G3 eingelegt, sodass sich an der Eingangswelle des ersten Teilgetriebes 5 aufgrund des Übersetzungsverhältnisses i = 6 eine Drehzahl n_{T1} einstellt, die kleiner ist als die Drehzahl n_{T2}. In dem folgenden Ausführungsbeispiel wird die elektrische Maschine 9 beispielsweise mit einer Drehzahl von 100 Umdrehungen pro Minute betrieben, was aufgrund des eingelegten zweiten Ganges G2 zu einer Drehzahl von 10 Umdrehungen pro Minute am Antriebsrad 2 und zu 60 Umdrehungen pro Minute an der Eingangswelle des Teilgetriebes 5 (n_{T1}) führt.

Anschließend wird, wie in der Figur 1C dargestellt, die erste Kupplung 6 in einer Schlupfstellung verbracht. Da im zweiten Teilgetriebe 7 der dritte Gang G3 eingelegt ist, ist die Drehzahl auf der Seite des Verbrennungsmotors 3 größer als auf der Seite des ersten Teilgetriebes 5, sodass über die Kupplung 6 der Kraftfluss von dem Verbrennungsmotor 3 zu dem ersten Teilgetriebe 5 führt.

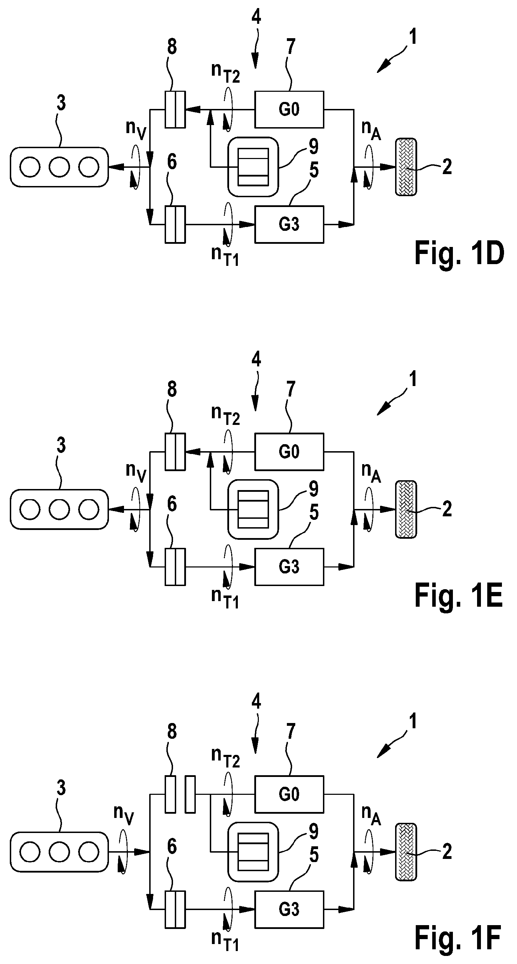

Anschließend wird gemäß Figur 1D das zweite Teilgetriebe 7 in eine Neutralstellung G0 verbracht, sodass von der elektrischen Maschine 9 über das Teilgetriebe 7 kein Drehmoment mehr auf die Antriebsräder 2 übertragen wird.

Im nächsten Schritt, wie er in Figur 1E dargestellt ist, wird die Drehzahl n_{T2} der elektrischen Maschine 9 auf 700 Umdrehungen pro Minute bzw. auf eine Startdrehzahl des Verbrennungsmotors 3 erhöht. Da in dem zweiten Teilgetriebe 7 kein Gang eingelegt ist, wirkt sich die Drehzahlerhöhung nicht auf die Antriebsräder 2 aus. Der Schlupf der ersten Kupplung 6 wird dabei derart eingestellt, dass das von der elektrischen Maschine 9 über die Kupplung 8 zum Verbrennungsmotor 3 übertragenen Drehmoment derart auf das erste Teilgetriebe 5 übertragen wird, dass weiterhin ein oder das gewünschte Vortriebsmoment an den Antriebsrädern 2 umgesetzt wird. Durch die erhöhte Drehzahl der elektrischen Maschine 9 von n_{T2} = 700 Umdrehungen pro Minute, wird auch der Verbrennungsmotor 3 mit einer erhöhten Drehzahl von n_{V} = 700 Umdrehungen pro Minute angetrieben. In dem vorliegenden Ausführungsbeispiel entspricht die Drehzahl von 700 Umdrehungen pro Minute der Startdrehzahl des Verbrennungsmotors 3. Natürlich können auch andere Startdrehzahlen vorgesehen werden, beispielsweise von 200 Umdrehungen pro Minute.

Gemäß Figur 1F wird im nächsten Schritt der Verbrennungsmotor 3 gestartet, sodass er eigenständig weiterläuft. Vorzugsweise nach einer möglichst kurzen Zeit nach dem erfolgten Start des Verbrennungsmotors 3 wird die zweite Kupplung 8 geöffnet. Damit ist die Drehzahl der elektrische Maschine 9 unabhängig von der des Verbrennungsmotors 3 und der Antriebsräder 2 einstellbar.

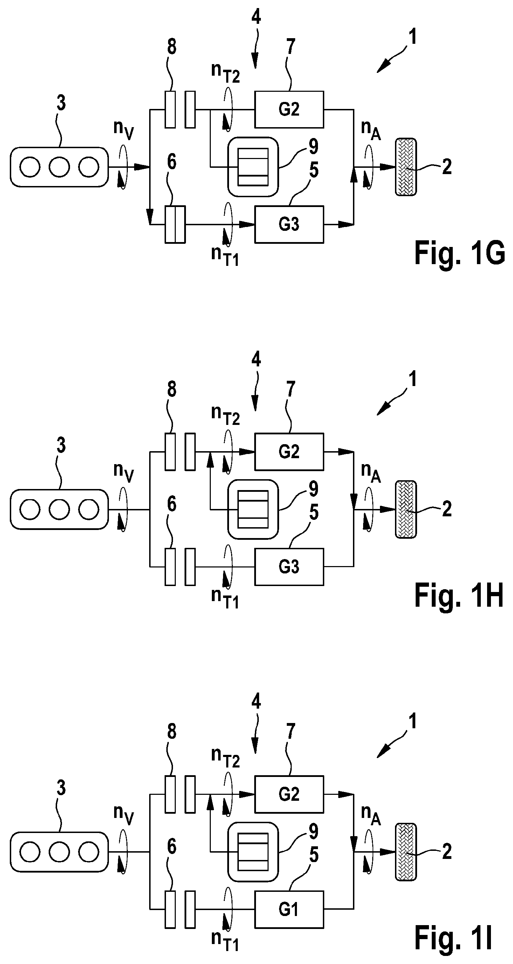

Im darauf folgenden Schritt gemäß Figur 1G wird die Drehzahl n_{T2} der elektrischen Maschine 9 auf ihre Ausgangsdrehzahl von 100 Umdrehungen pro Minute verringert und anschließend der zweite Gang G2 in dem Teilgetriebe 7 wieder eingelegt. Dadurch kann die elektrische Maschine 9 im folgenden Schritt gemäß Figur 1H den Antrieb des Kraftfahrzeugs bei einer Drehzahl n_{A} der Antriebsräder 2 im langsamen Kriechbetrieb wieder aufnehmen und der Verbrennungsmotor 3 eigenständig weiterlaufen. Dazu wird, wie in Figur 1 H dargestellt, die Kupplung 6 wieder geöffnet. So wird in diesem Schritt wieder der Ausgangszustand der langsamen elektrischen Fahrt erreicht, gemäß Figur 1A, mit dem Unterschied, dass der Verbrennungsmotor 3 gestartet ist. Durch das Verfahren, wie es mit Bezug auf die Figuren 1A bis 1H erläutert wurde, ist es möglich, auch bei langsamen Fahrgeschwindigkeiten des Kraftfahrzeugs, aus dem elektrischen Betrieb heraus den Verbrennungsmotor 3 zu starten, ohne dass dies für den Fahrer zu einem spürbaren Ruckeln führt und ohne dass die Fahrgeschwindigkeit geändert wird. Dabei wird während des gesamten Verfahrens ein Vortriebs- beziehungsweise Antriebsmoment an den Antriebsrädern 2 bereitgehalten beziehungsweise zur Verfügung gestellt.

Alternativ zu dem dargestellten Vorgehen ist es auch denkbar, in den Zuständen gemäß der Figuren 1B bis 1D die zweite Kupplung 8 nicht vollständig zu schließen, sondern ebenfalls in eine Schlupfstellung zu verbringen, damit beispielsweise unrunde Drehbewegungen, also Drehmomentsschwankungen des langsam angetriebenen Verbrennungsmotors 3 nicht an die Antriebsräder 2 gelangen.

Um nun die elektrischen Speicher des Kraftfahrzeugs aufzuladen, wird in einem folgenden Schritt gemäß Figur 1I in dem ersten Teilgetriebe 5 ein niedrigerer Gang mit einer höheren Übersetzung als zuvor, also ein Gang mit einer höheren Übersetzung als der Gang G3 eingelegt. In diesem Fall ist dies der niedrigste, erste Gang G1 mit einer Übersetzung von i = 16. Die Drehzahl n_{A} der Antriebsräder 2 führt damit dazu, dass die Drehzahl n_{T1} 160 Umdrehungen pro Minute erreicht. Die Drehzahldifferenz zwischen den Drehzahlen n_{V} und n_{T1} wird dadurch verringert.

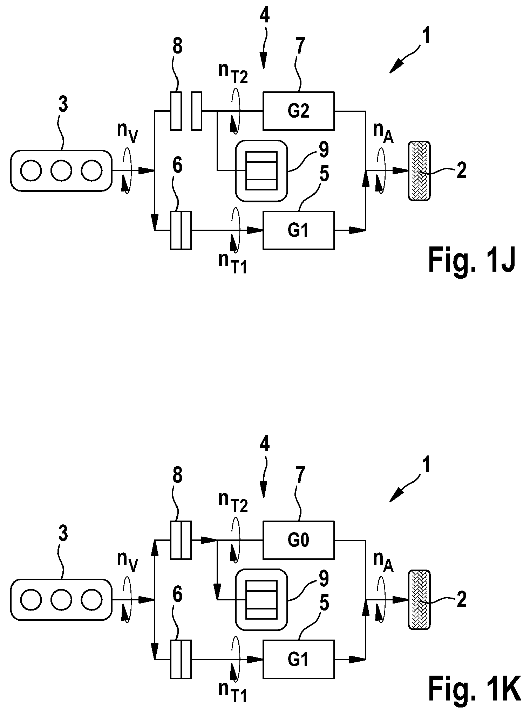

In dem folgenden Schritt gemäß Figur 1J wird die erste Kupplung 6 in eine Schlupfstellung verbracht, sodass auch das Antriebsdrehmoment des Verbrennungsmotors 3 über die Kupplung 6 und das erste Teilgetriebe 5 auf die Antriebsräder 2 übertragen wird. In diesem Zustand hat die schlupfende Kupplung 6 weniger Reibverluste als in Figuren 1F und 1G. Anschließend wird bevorzugt das zweite Teilgetriebe 7 in eine Neutralstellung G0 verbracht, also kein Gang eingelegt, sodass ein rein verbrennungsmotorischer Betrieb erfolgt.

Schließlich wird gemäß Figur 1K die zweite Kupplung 8 geschlossen und die elektrische Maschine 9 in einen generatorischen Betrieb umgeschaltet, sodass das von dem Verbrennungsmotor 3 erzeugte Drehmoment auf die elektrische Maschine 9 übertragen wird, um diese anzutreiben. Durch das Umschalten in den generatorischen Betrieb wird dabei elektrische Energie erzeugt, die zweckmäßigerweise dem elektrischen Speicher zugeführt wird. Die Drehzahl n_{T2} entspricht dann der Drehzahl n_{V}. Die Antriebsvorrichtung 1 befindet sich nun im generatorischen Betrieb, bei welchem der Verbrennungsmotor zum Antreiben des Kraftfahrzeugs sowie zum Antreiben der elektrischen Maschine 9 zum Aufladen des elektrischen Speichers genutzt wird.

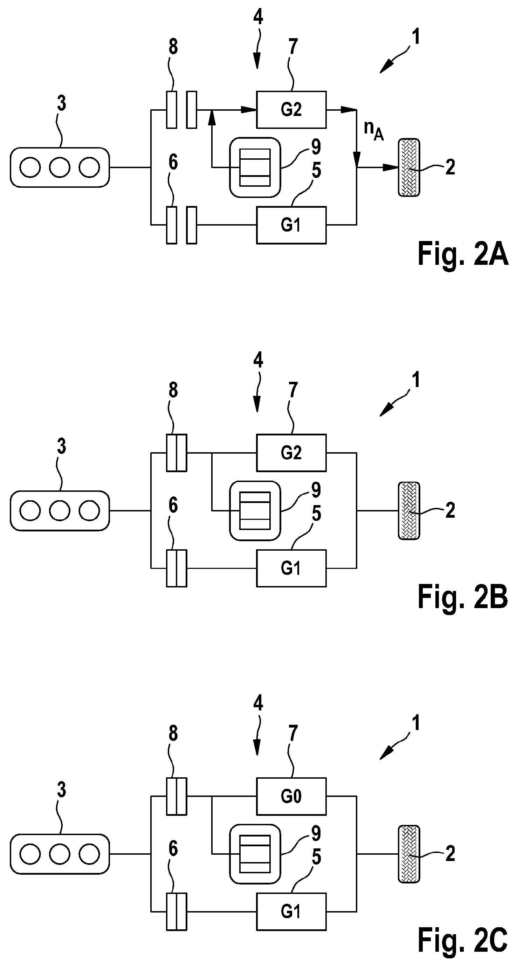

Bewegt sich im elektrischen Betrieb das Fahrzeug nicht, beispielsweise weil eine Steigung so steil wird, dass das elektrische Kriechmoment das Fahrzeug nur noch im Stillstand halten kann, muss der Verbrennungsmotor 3 aus dem Stillstand des Fahrzeugs gestartet werden. Weil der Stillstand energetisch unvorteilhaft ist, bietet es sich prinzipiell an, das Fahrzeug an dem stehenden Verbrennungsmotor 3 abzustützen, wenn also die Kupplung 6 geschlossen und ein Gang in dem Teilgetriebe 5 eingelegt ist. Jedoch ist dies nur möglich, solange sich dieser Zustand nicht ändert. Soll der elektrische Speicher mit Energie versorgt werden, so muss der Verbrennungsmotor 3 gestartet werden und die elektrische Maschine 9 in den generatorischen Betrieb gelangen. Durch das im Folgenden beschriebene Verfahren gelingt dies auch ohne ungewolltes Rückwärtsrollen des Fahrzeugs, also ohne dass ein Vortriebsmoment beziehungsweise Haltemoment wegfällt, an einer Steigung. Dazu soll anhand von Figuren 2A bis 2F ein alternatives Verfahren zum Starter des Verbrennungsmotors 3 erläutert werden.

Figur 2A zeigt die Antriebsvorrichtung gemäß Figur 1A, mit dem Unterschied, dass sich das Fahrzeug im Stillstand befindet, also die Drehzahl n_{A} = 0 ist. Dabei wird das Fahrzeug durch das durch die elektrische Maschine 9 aufgebrachte Drehmoment über das zweite Teilgetriebe 7 abgestützt.

Um das Fahrzeug mit geringem Energieaufwand im Stillstand zu halten, werden bevorzugt, wie in Figur 2B dargestellt, beide Kupplungen 6 und 8 geschlossen, während in dem ersten Teilgetriebe 5 der erste Gang G1 und in dem zweiten Teilgetriebe 7 der zweite Gang G2 eingelegt ist. Dadurch werden die beiden Teilgetriebe miteinander verklemmt, sodass auch ohne ein durch die elektrische Maschine 9 erzeugtes Drehmoment die Antriebsräder 2 das Kraftfahrzeug, nämlich über die verklemmten Teilgetriebe 5,7, abstützen.

Um den Verbrennungsmotor 3 zu starten, wird gemäß Figur 2C das zweite Teilgetriebe 7 in eine Neutralstellung G0 verbracht. Das Kraftfahrzeug bleibt weiterhin über das erste Teilgetriebe 5 und die geschlossene Kupplung 6 an dem stillstehenden Verbrennungsmotor 3 abgestützt.

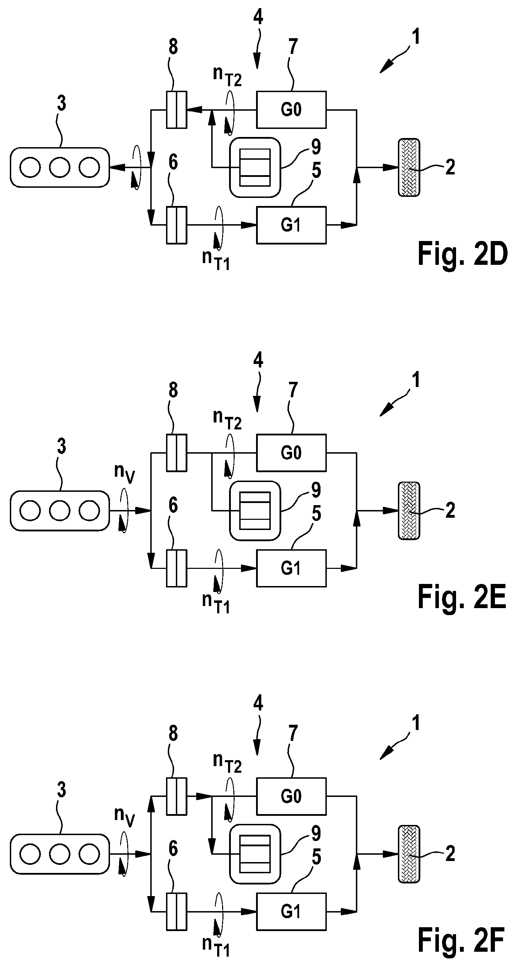

Anschließend wird gemäß Figur 2D die Drehzahl der elektrischen Maschine 9 auf die Startdrehzahl des Verbrennungsmotors von beispielsweise 700 Umdrehungen pro Minute erhöht und die erste Kupplung 6 in eine Schlupfstellung verbracht, sodass die erhöhte Drehzahl nicht auf das erste Teilgetriebe 5 übertragen wird. Der Schlupf der Kupplung 6 wird dabei vorzugsweise derart eingestellt, dass die Drehzahl n_{T1} = 0 ist und somit das Fahrzeug weiterhin trotz der Steigung stillsteht.

Anschließend wird gemäß Figur 2E der Verbrennungsmotor 3 gestartet, wodurch sich der Kraftfluss dahingehend ändert, dass das Drehmoment von dem Verbrennungsmotor 3 über die Kupplung 6 auf das Teilgetriebe 5 und damit auf die Antriebsräder 2 übertragen wird. Somit findet eine Abstützung über die schlupfende Kupplung 6 in dem Verbrennungsmotor 3 und nicht mehr an der elektrischen Maschine 9 (gemäß Figur 2D) statt.

Anschließend wird gemäß Figur 2F bevorzugt die elektrische Maschine 9 in den generatorischen Betrieb umgeschaltet, sodass durch das durch den Verbrennungsmotor 3 aufgebrachte Drehmoment elektrische Energie erzeugt und dem elektrischen Speicher zugeführt wird. Dabei befindet sich die Kupplung 6 bevorzugt solange im Schlupf, bis ein Vorwärtsfahren des Fahrzeugs entgegen der Steigung gewünscht ist. Die Kupplung 8 ist hingegen vollständig geschlossen, sodass die Drehzahl n_{T2} der Drehzahl n_{V} entspricht.

## Patentansprüche

1. Verfahren zum Betreiben einer Antriebsvorrichtung (1) eines Kraftfahrtzeugs, wobei die Antriebsvorrichtung (1) wenigstens einen Verbrennungsmotor (3) und wenigstens eine elektrische Maschine (9) sowie ein mit dem Verbrennungsmotor (3) wirkverbindbares Doppelkupplungsgetriebe (4) mit einem ersten Teilgetriebe (5), dem eine erste Kupplung (6) zugeordnet ist, und einem zweiten Teilgetriebe (7), dem eine zweite Kupplung (8) und die elektrische Maschine (9) zugeordnet sind, umfasst, wobei in einem rein elektrischen Fahrbetrieb die elektrische Maschine (9) motorisch betrieben wird, im zweiten Teilgetriebe (7) ein Fahrgang eingelegt ist und beide Kupplungen (6,8) geöffnet sind, **dadurch gekennzeichnet, dass** zum Starten des Verbrennungsmotors (3) während des elektrischen Fahrbetriebs
- die zweite Kupplung (8) geschlossen wird, um den Verbrennungsmotor (3) durch die elektrische Maschine (9) anzutreiben,
- im ersten Teilgetriebe (5) ein Gang eingelegt wird, der ein niedrigeres Übersetzungsverhältnis aufweist als der eingelegte Fahrgang des zweiten Teilgetriebes (7),
- die erste Kupplung (6) in eine Schlupfstellung und anschließend das zweite Teilgetriebe (7) in eine Neutralstellung verbracht werden,
- die Drehzahl der elektrischen Maschine (9) zumindest auf eine Startdrehzahl für den Verbrennungsmotor (3) erhöht wird, wobei der Schlupf der ersten Kupplung (6) zum Beibehalten eines Vortriebsmoments des Kraftfahrzeugs eingestellt wird, und
- der Verbrennungsmotor (3) bei Erreichen seiner Startdrehzahl gestartet wird.

2. Verfahren nach Anspruch 1, **dadurch gekennzeichnet, dass** nach dem Start des Verbrennungsmotors (3) die zweite Kupplung (8) geöffnet und die Drehzahl der elektrischen Maschine (9) insbesondere wieder auf ihre Ausgangsdrehzahl verringert und im zweiten Teilgetriebe (7) der Fahrgang wieder eingelegt wird.

3. Verfahren nach Anspruch 2, **dadurch gekennzeichnet, dass** zum Umschalten in einen verbrennungsmotorischen Betrieb zunächst die erste Kupplung (6) geöffnet und ein rein elektrischer Zwischenbetrieb eingestellt wird.

4. Verfahren nach Anspruch 3, **dadurch gekennzeichnet, dass** in dem ersten Teilgetriebe (5) ein Gang mit einer höheren Übersetzung als zuvor eingelegt und anschließend die erste Kupplung (6) wieder geschlossen oder in Schlupf gebracht wird.

5. Verfahren nach Anspruch 4, **dadurch gekennzeichnet, dass** die erste Kupplung (6) zunächst in eine Schlupfstellung verbracht wird, um ein ruckelfreies Ankoppeln des Verbrennungsmotors (3) zu gewährleisten.

6. Verfahren nach einem der Ansprüche 4 oder 5, **dadurch gekennzeichnet, dass** das zweite Teilgetriebe (7) in eine Neutralstellung verbracht, die elektrische Maschine (9) in einen generatorischen Betrieb geschaltet und die zweite Kupplung (8) zum Antreiben der elektrischen Maschine (9) geschlossen wird.

7. Verfahren nach einem oder mehreren der vorhergehenden Ansprüche, **dadurch gekennzeichnet, dass** beim Verbringen der ersten Kupplung (6) in eine Schlupfstellung, die zweite Kupplung (8) ebenfalls in eine Schlupfstellung verbrachte wird, um Drehmomentschwankungen des Verbrennungsmotors (3) zu dämpfen.

8. Verfahren nach einem der vorhergehenden Ansprüche, **gekennzeichnet durch** die Durchführung bei Fahrgeschwindigkeiten von 10 km/h oder kleiner, insbesondere von 5 km/h oder kleiner.

9. Verfahren nach einem der vorhergehenden Ansprüche, **gekennzeichnet durch** die Durchführung in Abhängigkeit von einem Ladezustand eines der elektrischen Maschine (9) zugeordneten elektrischen Speichers.

10. Vorrichtung zum Betreiben einer Antriebsvorrichtung (1) eines Kraftfahrzeugs, insbesondere zur Durchführung eines Verfahrens nach einem oder mehreren der vorhergehenden Ansprüche, wobei die Antriebsvorrichtung (1) wenigstens einen Verbrennungsmotor (3) und wenigstens eine elektrische Maschine (9) sowie ein mit dem Verbrennungsmotor (3) wirkverbindbares Doppelkupplungsgetriebe (4) mit einem ersten Teilgetriebe (5), dem eine erste Kupplung (6) zugeordnet ist, und einem zweiten Teilgetriebe (7), dem eine zweite Kupplung (8) und die elektrische Maschine (9) zugeordnet sind, umfasst, wobei die Vorrichtung Mittel aufweist, um die Antriebsvorrichtung zu steuern, und wobei für einen rein elektrischen Fahrbetrieb die Mittel der Antriebsvorrichtung derart steuern, dass die elektrische Maschine (9) motorisch betrieben wird, im zweiten Teilgetriebe (7) ein Fahrgang eingelegt ist und beide Kupplungen (6,8) geöffnet sind, **dadurch gekennzeichnet, dass** zum Starten des Verbrennungsmotors (3) während des elektrischen Fahrbetriebs die Mittel die Antriebsvorrichtung derart ansteuern, dass
- die zweite Kupplung (8) geschlossen wird, um den Verbrennungsmotor (3) durch die elektrische Maschine (9) anzutreiben,
- im ersten Teilgetriebe (5) ein Gang eingelegt wird, der ein niedrigeres Übersetzungsverhältnis aufweist als der eingelegte Fahrgang des zweiten Teilgetriebes (7),
- die erste Kupplung (6) in eine Schlupfstellung und anschließend das zweite Teilgetriebe (7) in eine Neutralstellung verbracht werden,
- die Drehzahl der elektrischen Maschine (9) zumindest auf eine Startdrehzahl für den Verbrennungsmotor (3) erhöht wird, wobei der Schlupf der ersten Kupplung (6) zum Beibehalten eines Vortriebsmoments des Kraftfahrzeugs eingestellt wird, und
- der Verbrennungsmotor (3) bei Erreichen seiner Startdrehzahl gestartet wird.

## Claims

1. Method for operating a drive apparatus (1) of a motor vehicle, the drive apparatus (1) comprising at least one internal combustion engine (3), at least one electric machine (9) and a double clutch transmission (4) which can be operatively connected to the internal combustion engine (3) with a first component transmission (5) which is assigned a first clutch (6), and a second component transmission (7) which is assigned a second clutch (8) and the electric machine (9), the electric machine (9) being operated as a motor in a purely electric driving mode, a driving gear being engaged in the second component transmission (7) and both clutches (6, 8) being open, **characterized in that**, in order to start the internal combustion engine (3) during the electric driving mode,
- the second clutch (8) is closed, in order to drive the internal combustion engine (3) by way of the electric machine (9),
- a gear is engaged in the first component transmission (5), which gear has a lower transmission ratio than the engaged driving gear of the second component transmission (7),
- the first clutch (6) is moved into a slip position and subsequently the second component transmission (7) is moved into a neutral position,
- the rotational speed of the electric machine (9) is increased at least to a starting rotational speed for the internal combustion engine (3), the slip of the first clutch (6) being adjusted in order to maintain a tractive torque of the motor vehicle, and
- the internal combustion engine (3) is started when its starting rotational speed is reached.

2. Method according to Claim 1, **characterized in that**, after the start of the internal combustion engine (3), the second clutch (8) is opened and the rotational speed, of the electric machine (9) is reduced, in particular, to its initial rotational speed again, and the driving gear is engaged again in the second component transmission (7).

3. Method according to Claim 2, **characterized in that**, in order to switch over into an internal combustion engine mode, first of all the first clutch (6) is opened and a purely electric intermediate mode is set.

4. Method according to Claim 3, **characterized in that** a gear with a higher transmission ratio than previously is engaged in the first component transmission (5), and subsequently the first clutch (6) is closed again or moved into slip operation.

5. Method according to Claim 4, **characterized in that** the first clutch (6) is first of all moved into a slip position, in order to ensure judder-free coupling of the internal combustion engine (3).

6. Method according to either of Claims 4 and 5, **characterized in that** the second component transmission (7) is moved into a neutral position, the electric machine (9) is switched into a generator mode, and the second clutch (8) is closed in order to drive the electric machine (9).

7. Method according to one or more of the preceding claims, **characterized in that**, when the first clutch (6) is moved into a slip position, the second clutch (8) is likewise moved into a slip position, in order to damp torque fluctuations of the internal combustion engine (3).

8. Method according to one of the preceding claims, **characterized by** being carried out at driving speeds of 10 km/h or less, in particular of 5 km/h or less.

9. Method according to one of the preceding claims, **characterized by** being carried out in a manner which is dependent on a charge state of an electric accumulator which is assigned to the electric machine (9).

10. Apparatus for operating a drive apparatus (1) of a motor vehicle, in particular for carrying out a method according to one or more of the preceding claims, the drive apparatus (1) comprising at least one internal combustion engine (3), at least one electric machine (9) and a double clutch transmission (4) which can be operatively connected to the internal combustion engine (3) with a first component transmission (5) which is assigned a first clutch (6), and a second component transmission (7) which is assigned a second clutch (8) and the electric machine (9), the apparatus having means for controlling the drive apparatus, and the means of the drive apparatus performing a controlling operation for a purely electric driving mode in such a way that the electric machine (9) is operated as a motor, a driving gear being engaged in the second component transmission (7) and both clutches (6, 8) being open, **characterized in that**, in order to start the internal combustion engine (3) during the electric driving mode, the means actuate the drive apparatus in such a way that
- the second clutch (8) is closed, in order to drive the internal combustion engine (3) by way of the electric machine (9),
- a gear is engaged in the first component transmission (5), which gear has a lower transmission ratio than the engaged driving gear of the second component transmission (7),
- the first clutch (6) is moved into a slip position and subsequently the second component transmission (7) is moved into a neutral position,
- the rotational speed of the electric machine (9) is increased at least to a starting rotational speed for the internal combustion engine (3), the slip of the first clutch (6) being adjusted in order to maintain a tractive torque of the motor vehicle, and
- the internal combustion engine (3) is started when its starting rotational speed is reached.

## Revendications

1. Procédé de conduite d'un ensemble d'entraînement (1) de véhicule automobile, l'ensemble d'entraînement (1) comprenant au moins un moteur (3) à combustion interne et au moins une machine électrique (9) ainsi qu'une transmission (4) à double embrayage apte à être reliée fonctionnellement au moteur (3) à combustion interne et présentant une première transmission partielle (5) à laquelle un premier embrayage (6) est associé et une deuxième transmission partielle (7) à laquelle un deuxième embrayage (8) et la machine électrique (9) sont associés,
la machine électrique (9) étant utilisée en mode moteur lorsque le mode de conduite est purement électrique, un étage de transmission étant sélectionné dans la deuxième transmission partielle (7) et les deux embrayages (6, 8) étant ouverts,
**caractérisé en ce que**
pour démarrer le moteur (3) à combustion interne en mode de conduite électrique,
- le deuxième embrayage (8) est fermé pour faire entraîner le moteur (3) à combustion interne par la machine électrique (9),
- un étage qui présente un rapport de transmission plus bas que le rapport de transmission sélectionné dans la deuxième transmission partielle (7) est sélectionné dans la première transmission partielle (5),
- le premier embrayage (6) est amené en position de patinage et ensuite la deuxième transmission partielle (7) en position neutre,
- la vitesse de rotation de la machine électrique (9) est augmentée au moins jusqu'à une vitesse de rotation de démarrage du moteur (3) à combustion interne, le patinage du premier embrayage (6) étant ajusté pour maintenir un couple d'avancement du véhicule automobile et
- le moteur (3) à combustion interne est démarré lorsqu'il a atteint sa vitesse de rotation de démarrage.

2. Procédé selon la revendication 1, **caractérisé en ce qu'**après le démarrage du moteur (3) à combustion interne, le deuxième embrayage (8) est ouvert et la vitesse de rotation de la machine électrique (9) est diminuée en particulier jusqu'à sa vitesse de rotation initiale, le rapport de transmission étant de nouveau sélectionné dans la deuxième transmission partielle (7).

3. Procédé selon la revendication 2, **caractérisé en ce que** pour basculer en fonctionnement sur le moteur à combustion interne, le premier embrayage (6) est d'abord ouvert et un fonctionnement intermédiaire purement électrique est établi.

4. Procédé selon la revendication 3, **caractérisé en ce que** dans la première transmission partielle (5), un étage à rapport de transmission plus élevé que celui sélectionné précédemment est établi et ensuite le premier embrayage (6) est de nouveau fermé ou amené à patiner.

5. Procédé selon la revendication 4, **caractérisé en ce que** pour garantir un accouplement sans secousse du moteur (3) à combustion interne, le premier embrayage (6) est d'abord amené en position de patinage.

6. Procédé selon l'une des revendications 4 ou 5, **caractérisé en ce que** la deuxième transmission partielle (7) est amenée en position neutre, la machine électrique (9) est commutée en fonctionnement en mode génératrice et le deuxième embrayage (8) est fermé pour entraîner la machine électrique (9).

7. Procédé selon l'une ou plusieurs des revendications précédentes, **caractérisé en ce que** lorsque le premier embrayage (6) est amené en position de patinage, le deuxième embrayage (8) est également amené en position de patinage pour amortir des variations du couple de rotation du moteur (3) à combustion interne.

8. Procédé selon l'une des revendications précédentes, **caractérisé en ce qu'**il est mis en oeuvre à des vitesses de conduite de 10 km/h ou plus basses et en particulier de 5 km/h ou plus basses.

9. Procédé selon l'une des revendications précédentes, **caractérisé en ce qu'**il est mis en oeuvre en fonction de l'état de charge d'un accumulateur associé à la machine électrique (9).

10. Ensemble de conduite d'un ensemble d'entraînement (1) de véhicule automobile, en particulier en vue de la mise en oeuvre d'un procédé selon l'une ou plusieurs des revendications précédentes, l'ensemble d'entraînement (1) comprenant au moins un moteur (3) à combustion interne et au moins une machine électrique (9) ainsi qu'une transmission (4) à double embrayage apte à être reliée fonctionnellement au moteur (3) à combustion interne et présentant une première transmission partielle (5) à laquelle un premier embrayage (6) est associé et une deuxième transmission partielle (7) à laquelle un deuxième embrayage (8) et la machine électrique (9) sont associés,
l'ensemble présentant des moyens de commande de l'ensemble d'entraînement, les moyens commandant l'ensemble d'entraînement dans un mode de conduite purement électrique de telle sorte que la machine électrique (9) soit utilisée en mode moteur, qu'un étage de transmission soit sélectionné dans la deuxième transmission (7) et que les deux embrayages (6, 8) soient ouverts,
**caractérisé en ce que**
pour démarrer le moteur (3) à combustion interne en mode de conduite électrique, les moyens commandent l'ensemble d'entraînement de telle sorte que
- le deuxième embrayage (8) soit fermé pour faire entraîner le moteur (3) à combustion interne par la machine électrique (9),
- un étage qui présente un rapport de transmission plus bas que le rapport de transmission sélectionné dans la deuxième transmission partielle (7) est sélectionné dans la première transmission partielle (5),
- le premier embrayage (6) est amené en position de patinage et ensuite la deuxième transmission partielle (7) en position neutre,
- la vitesse de rotation de la machine électrique (9) est augmentée au moins jusqu'à une vitesse de rotation de démarrage du moteur (3) à combustion interne, le patinage du premier embrayage (6) étant ajusté pour maintenir un couple d'avancement du véhicule automobile et
- le moteur (3) à combustion interne est démarré lorsqu'il a atteint sa vitesse de rotation de démarrage.
